# EUROPEAN PATENT SPECIFICATION

(11) **EP 4 347 531 B1**
(45) Date of publication and mention of the grant of the patent: **14.05.2025**
(21) Application number: 22730815.2
(22) Date of filing: 25.05.2022
(51) Int. Cl.: C04B 35/5831, B23B 27/14, C04B 35/645, C04B 35/626, C04B 41/52, C04B 37/02, C04B 35/63, C04B 35/5835, C04B 41/89, C04B 41/00

(54) **POLYCRYSTALLINE CUBIC BORON NITRIDE BODY**
KÖRPER AUS POLYKRISTALLINEM KUBISCHEM BORNITRID
CORPS DE NITRURE DE BORE CUBIQUE POLYCRISTALLIN

(30) Priority: 27.05.2021 EP 21176226
(43) Date of publication of application: 10.04.2024
(73) Proprietor: Seco Tools AB, 737 82 Fagersta (SE)
(72) Inventor: M'SAOUBI, Rachid, 737 82 Fagersta (SE); LENRICK, Filip, 737 82 Fagersta (SE); BUSHLYA, Volodymyr, 737 82 Fagersta (SE)
(74) Representative: Sandvik
(86) International application number: PCT/EP2022/064267
(87) International publication number: WO 2022/248582

(56) References cited:
- EP-A1- 3 812 355
- WO-A1-2021/048265
- US-A1- 2017 362 130
- US-A1- 2021 071 291
- DATABASE WPI Week 198142, Derwent World Patents Index; AN 1981-76709D, XP002804596

## Description

### Technical field

The present disclosure relates to a polycrystalline cubic boron nitride (PCBN) body, a method for manufacturing the body, and use of the same.

### Background

Current tooling solutions for machining difficult materials such as heat resistant nickel based or cobalt based super alloys (HRSA), are limited to the use of coated cemented carbide tools usually operating at relatively low cutting speeds. This is today the common practice in aerospace manufacturing industry.

Main wear morphologies found when machining HRSA alloys are crater wear, flank/nose wear, notching, cracking, chipping, plastic deformation, and catastrophic failure. Cratering is often attributed to diffusion or dissolution wear mechanisms where a smooth worn surface is observed. Additionally, abrasion is coupled to flank wear development due to tool material softening at elevated cutting temperatures. The flank portion of a cutting tool is subjected to workpiece contact movement and flank wear, which will lead to poor surface quality of the workpiece, inaccuracy in the cutting process and increased friction as the cutting proceeds. Cutting tools of polycrystalline cubic boron nitride (PCBN) can maintain high hardness at elevated temperatures and therefore gain an increasing popularity when machining HRSA alloys.

With the increasing demand for improved productivity, for example, by increasing cutting speeds or having higher metal removal rate, in aeroengine manufacturing, alternative solutions to coated cemented carbide have emerged and can be used in semi-finishing applications for high-speed machining of HRSA alloys. Examples of alternative solutions used today are PCBN cutting tools with a titanium carbide (TiC)- or titanium carbide nitride (TiCN)-based binder.

Yet, PCBN materials have a higher cost compared to cemented carbide materials and to be cost-effective there is a need to demonstrate even higher productivity than with conventional PCBN solutions having TiC or TiCN as a binder.

Patent application WO2011098556 A1 discloses an example of a PCBN material having a conventional binder phase comprising TiC or TiCN. As a deviation from conventional PCBN composition the patent application EP3239116 A1 shows a PCBN sintered body having 40-85 volume percent (vol%) cBN and 15-60 vol% binder phase. The binder phase has the main constituent of aluminum (Al) compounds such as Al2O3, AIN and an additive of zirconium (Zr) oxide compounds such as zirconium oxide (ZrO), and zirconium dioxide (ZrO₂) in an amount of up to 10 vol% of the whole cubic boron nitride sintered body. JP S56-112438 A describes a cBN sintered body for a cutting tool and aims at improving the abrasion resistance. It discloses its manufacture by forming and HPHT sintering at 1400°C under 45 kbar a powder mixture comprising 60 wt% cBN, 20 wt% Al₂O₃, 8 wt% Al, 6 wt% ZrO₂ and 6 wt% ZrN.

To meet the above demands, there is a need for new PCBN material that can be used for a body of a cutting tool, and where the PCBN material has advanced properties to improve tool-life during machining operations. When a better flank wear resistance and/or notch wear resistance is obtained, an extended tool life will be obtained for some machining applications and operations.

### Summary

It is an aim of the present invention to provide a sintered PCBN body having improved performance in machining operations.

This aim is achieved by a PCBN body as defined in claim 1 and by the method of claim 14.

The invention provides a sintered polycrystalline cubic boron nitride (PCBN) body comprising between 40 and 85 vol% of cubic boron nitride (cBN) particles and between 15 and 60 vol% of a binder phase, wherein the binder phase comprises at least one metal oxide and at least one metal nitride, wherein the at least one metal oxide comprises between 20 and 100 vol% of zirconium oxide (ZrO₂) and up to 80 vol% of alumina (Al₂O₃) counted as a volume percentage of the total metal oxide content of the binder, the at least one metal nitride comprises 1 to 10 vol% aluminium nitride (AIN) and at least one metal nitride selected from the group consisting of vanadium nitride (VN), niobium nitride (NbN) and hafnium nitride (HfN), and that the metal nitride content selected from said at least one of vanadium nitride (VN), niobium nitride (NbN) and hafnium nitride (HfN) constitutes at least 10 vol% of the total binder phase, and wherein said at least one metal oxide constitutes at least 10 vol%, preferably for example at least 20 vol% or at least 30 vol%, or at least 40 vol%, or at least 50 vol%, or at least 60 vol% of the total binder phase, and wherein the content of said at least one metal oxide is at least 10 vol% of the total binder phase.

According to the invention, , the content of AIN in the sintered polycrystalline cubic boron nitride (PCBN) body ranges from 1 to 10 vol%, such as from 1 to 7 vol%, for example 2 to 6 vol% or 3 to 5 vol% of the total binder phase.

According to some aspects the binder phase of the PCBN body further comprises at least one metal oxynitride being a reaction product of one of the at least one metal oxides and one of the at least one metal nitrides. In other words when the binder phase comprises at least one metal oxynitride, the at least one metal oxynitride is a reaction product of a metal oxide selected from the group consisting of ZrO₂ and Al₂O₃, and a metal nitride selected from the group consisting of VN, NbN and HfN. Tests have shown that the average tool life of a PCBN body having a binder phase according to the above disclosed composition is increased compared to prior art solutions with other types of binder phase compositions. When the binder phase of the PCBN body has a composition according to the above disclosed composition a higher flank wear resistance as well as higher notch wear resistance during machining is obtained compared to prior art solutions, when the same cutting parameters are used.

The PCBN body can comprise between 50 and 75 vol% of cBN particles, preferably between 60 and 75 vol% of cBN particles, even more preferably between 60 and 70 vol% of cBN particles.

The PCBN body can comprise between 25 and 50 vol% of a binder phase, preferably between 25 and 40 vol% of a binder phase, even more preferably between 30 and 40 vol%.

The content of cBN particles and binder phase in the PCBN body can be up to 100 vol% of the PCBN body.

The content of metal oxide, metal nitride and metal oxynitride in the binder phase can be up to 100 vol% of the binder phase.

According to some aspects, the binder phase comprises at least one oxynitride selected from the group consisting of zirconium oxynitride (Zr(O,N)), zirconium vanadium oxynitride ((Zr,V)ON), zirconium niobium oxynitride ((Zr,Nb)ON) and zirconium hafnium oxynitride ((Zr,Hf)ON).

According to some aspects, the binder phase comprises at least one oxynitride selected from the group consisting of aluminium oxynitride (Al(O,N)), aluminium vanadium oxynitride ((Al,V)ON), aluminium niobium oxynitride ((Al,Nb)ON) and aluminium hafnium oxynitride ((Al,Hf)ON).

According to some aspects, the binder phase consists of ZrO₂, Al₂O₃, AIN and at least one metal nitride selected from the group consisting of VN, NbN and HfN.

According to some aspects, the metal nitride selected from the group consisting of VN, NbN and HfN constitutes up to 50 vol% of the total binder phase, for example up to 40 vol% or up to 30 vol% or up to 20 vol% of the total binder phase. By having up to 50 vol% or up to 40 vol% or up to 30 vol% or up to 20 vol% of the total binder phase being a metal nitride from the group consisting of VN, NbN and HfN, the material mechanical properties and cutting edge chipping resistance are improved compared to a binder comprising only metal oxide phases.

The metal nitride selected from the group consisting of VN, NbN and HfN can constitute between 10 and 50 vol% of the total binder phase. By having between 10 and 50 vol% of the total binder phase being a metal nitride from the group consisting of VN, NbN and HfN the material mechanical properties and cutting edge chipping resistance are improved compared to a binder comprising only metal oxide phases.

The metal nitride selected from the group consisting of VN, NbN and HfN can constitute at least 20 vol% or at least 30 vol% or at least 40 vol% of the total binder phase.

Said at least one metal oxide and the aluminium nitride together, the content of the aluminium nitride being as further specified herein, can constitute up to 90 vol% or up to 80 vol% or up to 70 vol% or up to 60 vol% or up to 50 vol% or up to 40 vol% or up to 30 vol% or up to 20 vol% of the total binder phase.

According to some aspects, the binder phase consists of ZrO₂, Al₂O₃, AlN, at least one metal nitride selected from the group consisting of VN, NbN and HfN, and at least one oxynitride from the group consisting of: Zr(O,N), (Zr,V)ON, (Zr,Nb)ON, (Zr,Hf)ON, Al(O,N), (Al,V)ON, (Al,Nb)ON and (Al,Hf)ON. Tests have shown that the average tool life of a PCBN body comprising a binder phase consisting of ZrO₂, Al₂O₃, AlN, at least one metal nitride selected from the group consisting of: VN, NbN and HfN, and at least one oxynitride from the group consisting of: Zr(O,N), (Zr,V)ON, (Zr,Nb)ON, (Zr,Hf)ON, Al(O,N), (Al,V)ON, (Al,Nb)ON and (Al,Hf)ON is increased compared to prior art solutions with other types of binder phase compositions.

According to some aspects, the oxynitride and metal nitride are between 10 and 50 vol% of the total binder phase of the PCBN body. Preferably the oxynitride and metal nitride are between 25 and 50 vol% of the total binder phase of the PCBN body.

According to some aspects, the ZrO₂ is between 20 and 90 vol% of the total metal oxide content of the binder phase. Preferably the ZrO₂ is between 50 and 90 vol% of the total metal oxide content of the binder phase, even more preferably the ZrO₂ is between 70 and 90 vol% of the total metal oxide content of the binder phase.

According to some aspects, the Al₂O₃ is between 5 and 25 vol% of the total binder phase. Preferably the Al₂O₃ is between 5 and 15 vol% of the total binder phase. According to one embodiment, further constituents may be comprised in the binder phase, e.g. TiC or other conventionally used constituents. However, the binder phase preferably consists of metal oxides and metal nitrides as further specified herein.

According to some aspects, the PCBN body is backed with a backing body of cemented carbide.

According to some aspects, the PCBN body is coated with a PVD- or CVD coating having a thickness of between 0.8 µm and 15 µm.

According to some aspects, not claimed, the PCBN body is coated with a PVD coating comprising a first (Ti,Al)-based nitride sub-coating being a single (Ti₁₋ₓAlₓ)N_{z} -layer where 0.1 < x < 0.4, 0.6 < z < 1.2 and a second (Ti,Al)-based nitride sub-coating being a laminated structure comprising a (Ti_{1-x1-y1}Alₓ₁Cr_{y1})N_{z1} -layer where 0.5 < x1 < 0.75, 0.05 < y1 < 0.2, 0.6 < z1 < 1.2. Preferably the first (Ti,Al)-based nitride sub-coating has a thickness between 0.1 µm and 2 µm. The second (Ti,Al)-based nitride sub-coating having a laminated structure may consist of alternating A and B layers: A/B/A/B/A/B/..., where layer A is (Ti₁₋ₓAlₓ)N_{z}, 0.1 < x < 0.4, 0.6 < z < 1.2, and layer B is (Ti_{1-x1-y1}Alₓ₁Cr_{y1})N_{z1}, 0.5 < x1 < 0.75, 0.05 < y1 < 0.2, 0.6 < z1 < 1.2. Preferably the second (Ti,Al)-based nitride sub-coating has a laminated structure having a thickness between 0.5 µm and 10 µm, and the A and B layers of the laminated structure have an average individual layer thickness between 1 nm and 100 nm, preferably between 5 nm and 50 nm, most preferably between 5 nm and 30 nm.

According to some aspects, not claimed, the PCBN body is coated with a PVD coating comprising a columnar and polycrystalline nano-laminated structure of alternating A and B layers, where layer A is (Ti₁₋ₓAlₓMe1ₚ)Nₐ, with 0.3 < x < 0.95, preferably 0.45 < x < 0.75, 0.90 < a < 1.10, preferably 0.96 < a < 1.04, 0 ≤ p < 0.15, and Me1 is one or more of Zr, Y, V, Nb, Mo and W, layer B is (Ti_{1-y-z}Si_{y}Me2_{z})N_{b}, with 0.05 < y < 0.25, preferably 0.05 < y < 0.18, 0 ≤ z < 0.4, 0.9 < b < 1.1, preferably 0.96 < b < 1.04, and Me2 is one or more of Y, V, Nb, Mo, W and Al. The nano-laminated structure has a thickness between 0.5 µm and 10 µm, preferably between 0.5 µm and 5 µm, an average column width between 20 nm and 1000 nm, and an average individual thickness of A and B layers between 1 nm and 50 nm.

According to some aspects, the PCBN body is a cutting tool or a cutting tip of a cutting tool.

The cutting tool is used for machining by chip removal, such as in turning, milling or drilling operations. Examples of cutting tools are indexable cutting inserts, solid drills and end mills.

The disclosure provides a method of manufacturing a PCBN body according to any of the above aspects, comprising the following steps:
(a) providing a cubic boron nitride (cBN) powder having an average particle size between 0.5 µm and 15 µm,
(b) providing binder constituents comprising ZrO₂, or a mixture of ZrO₂ and Al₂O₃, at least one metal nitride selected from the group consisting of: VN, NbN and HfN constituting at least 10 % by volume of the binder mixture, and metallic aluminium,
(c) admixing the binder constituents with the cBN powder to a powder mixture,
(d) milling the powder mixture,
(e) forming a green body of the powder mixture,
(f) heat treating the green body at a temperature above 600 °C under vacuum to ensure sufficient degassing and removal of absorbed species,
(g) sintering the green body at a temperature of at least 1200 °C and at a pressure of at least 4 GPa to form a solid sintered PCBN compact from which the PCBN body is formed.

Metallic aluminium can be added in an amount of 1 to 10 vol% or 1 to 5 vol% of the total amount of components added.

The heat treating of the green body can be performed at a temperature below 1100 °C.

The sintering step of the green body can be performed at a temperature below 2000 °C.

The manufactured solid sintered PCBN compact can be cut thereafter into pieces by using electric discharge machining (EDM) or laser.

The invention provides a use of a PCBN body according to any of the aspects described above for machining in nickel based and/or cobalt based super alloys.

### Brief description of the drawings

The invention will now be explained more closely by the description of different embodiments of the invention and with reference to the appended figures.
Fig. 1 shows an example of a solid PCBN body.
Fig. 2 shows another example of a PCBN body with a carbide backing body that is brazed to a cemented carbide insert carrier.
Fig. 3 shows an optical microscopy image of flank wear on a PCBN body according to an embodiment of the invention.
Fig. 4 shows an optical microscopy image of flank wear on a first comparative PCBN body.
Fig. 5 shows an optical microscopy image of flank wear on a second comparative PCBN body.
Fig. 6 shows an optical microscopy image of notch wear on a PCBN body according to an embodiment of the invention.
Fig. 7 shows an optical microscopy image of notch wear on a first comparative PCBN body.
Fig. 8 shows an optical microscopy image of notch wear on a second comparative PCBN body.
Fig. 9 shows a block diagram of an example method of manufacturing the PCBN body.
Fig. 10 shows a SEM image and XEDS mapping of different elements in a PCBN body according to an embodiment of the invention.
Fig. 11 shows an X-Ray θ-2θ diffractogram of the PCBN body according to an embodiment of the invention.

### Detailed description

Aspects of the present disclosure will be described more fully hereinafter with reference to the accompanying drawings. The device and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. As used herein, the singular forms "a", "an" and "the" are intended to include the plural forms as well, unless the context clearly indicates otherwise.

The term "cutting tool", as used herein, is intended to denote cutting tools suitable for metal cutting by chip removal, such as turning, milling or drilling. Examples of cutting tools are indexable cutting inserts, solid drills and end mills.

Unless otherwise defined, all terms used herein have the same meaning as commonly understood by one of ordinary skill in the art to which this disclosure belongs.

Common for cutting tools inserts is that they may be a solid body or a body comprising a backing body onto which an additional material is placed, either over the cutting edge on the rake face, a so-called tipped body, or such that it covers the full rake, a so-called full-face body.

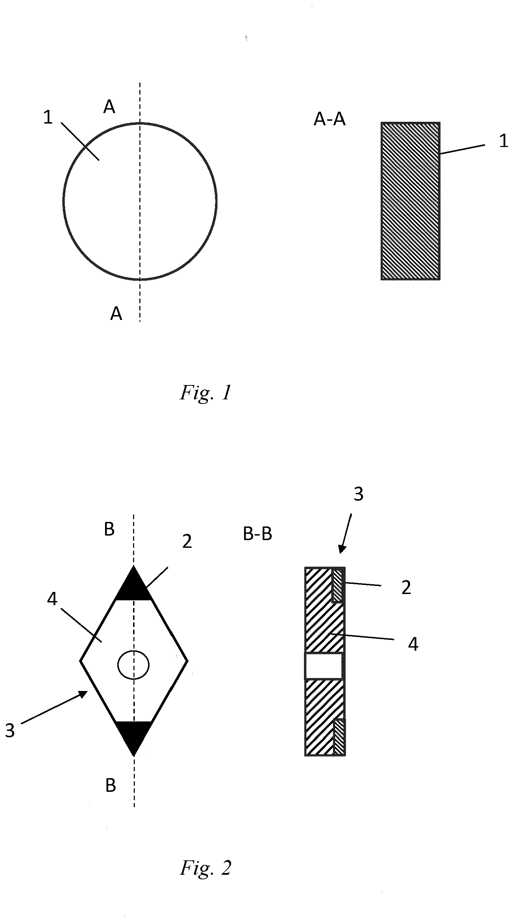

Figure 1 shows an example of a sintered PCBN body 1. The PCBN body in figure 1 is a solid body. The solid sintered PCBN body 1 in figure 1 can in itself be a cutting tool insert or can be cut into smaller pieces that are used as, for example, cutting tips of a cutting tool insert.

Figure 2 shows an example of a cutting tool insert 3 comprising a backing body 4 and a cutting tip in the form of a sintered PCBN body 2 according to the present disclosure. The PCBN body 2 is integrally bonded to the backing body 4 made of, for example, cemented carbide.

The invention provides a sintered PCBN body 1, 2 comprising between 40 and 85 vol% of cubic boron nitride (cBN) particles and between 15 and 60 vol% of a binder phase, wherein the binder phase comprises at least one metal oxide and at least one metal nitride. The at least one metal oxide comprises between 20 and 100 vol% of zirconium oxide (ZrO₂) and up to 80 vol% of alumina (Al₂O₃) counted as a volume percentage of the total metal oxide content of the binder. Further, the at least one metal nitride comprises 1 to 10 vol% aluminium nitride (AIN) and at least one of the metal nitrides selected from the group consisting of vanadium nitride (VN), niobium nitride (NbN) and hafnium nitride (HfN). The content of the latter metal nitride(s) is at least 10 vol% of the binder phase and the content of the at least one metal oxide is at least 10 vol% of the total binder phase.

The binder phase of the sintered PCBN body 1 may, for example, comprise at least one metal oxynitride being a reaction product of one of the at least one metal oxides and one of the at least one metal nitrides.

The binder phase may, for example, comprise at least one oxynitride selected from the group consisting of zirconium oxynitride (Zr(O,N)), zirconium vanadium oxynitride ((Zr,V)ON), zirconium niobium oxynitride ((Zr,Nb)ON) and zirconium hafnium oxynitride ((Zr,Hf)ON).

As an alternative or additionally, the oxynitride may, for example, comprise at least one oxynitride selected from the group consisting of aluminium oxynitride (Al(O,N)), aluminium vanadium oxynitride ((Al,V)ON), aluminium niobium oxynitride ((Al,Nb)ON) and aluminium hafnium oxynitride ((Al,Hf)ON).

The oxynitride and metal nitride content of at least one of vanadium nitride (VN), niobium nitride (NbN) and hafnium nitride (HfN) are, for example, between 10 and 50 vol% of the total binder phase.

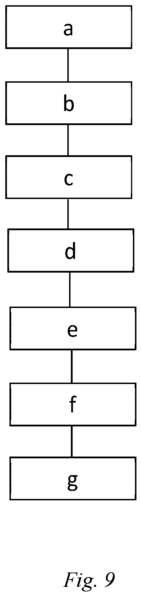

Figure 9 shows a block diagram of an example method of manufacturing the PCBN body 1, 2. According to the example method the following steps are performed.
(a) providing a cubic boron nitride (cBN) powder having an average particle size between 0.5 µm and 15 µm,
(b) providing binder constituents comprising ZrO₂, or a mixture of ZrO₂ and Al₂O₃, at least one metal nitride selected from the group consisting of: VN, NbN and HfN, and wherein said at least one metal nitride is at least 10 % by volume of the binder mixture, and metallic aluminium,
(c) admixing the binder constituents with the cBN powder to a powder mixture,
(d) milling the powder mixture,
(e) forming a green body of the powder mixture,
(f) heat treating the green body at a temperature above 600 °C under vacuum to ensure sufficient degassing and removal of absorbed species,
(g) sintering the green body at a temperature of at least 1200 °C and at a pressure of at least 4 GPa to form a solid sintered PCBN compact from which the PCBN body (1, 2) is formed.

The following method for manufacturing the PCBN body, outside of the scope of the invention, is also disclosed:
- providing a cubic boron nitride (cBN) powder having an average particle size between 0.5 µm and 15µm from hexagonal boron nitride (hBN) powder. This is done at high temperature and high pressure according to standard practice,
- providing a binder mixture of binder constituents comprising ZrO₂, or a mixture of ZrO₂ and Al₂O₃, at least one metal nitride selected from the group consisting of: VN, NbN and HfN, and wherein said metal nitride is at least 10 % by volume of the binder mixture, and metallic aluminium.
- milling the binder mixture to attain an average particle size of the binder constituents of between 0.5 µm and 10 µm,
- admixing the milled binder mixture with the cBN powder to a powder mixture,
- milling the powder mixture to reduce the average particle size and ensure accurate mixing and dispersion of cBN phase in the binder mixture,
- forming a green body of the powder mixture,
- heat treating the green body at a temperature above 600 °C under vacuum to ensure sufficient degassing and removal of absorbed species,
- sintering the green body at a temperature of at least 1200 °C and at a pressure of at least 4 GPa to form solid sintered PCBN compact from which the PCBN body 1, 2 is formed.

The solid sintered PCBN compact is, for example, cut into pieces by using EDM or laser. The cut pieces forming PCBN bodies 1, 2 may be brazed to a cemented carbide backing body 4 to form a cutting tool as seen in, for example, figure 2.

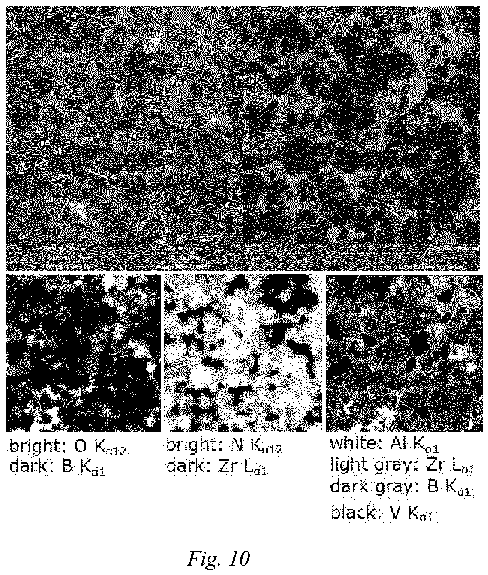

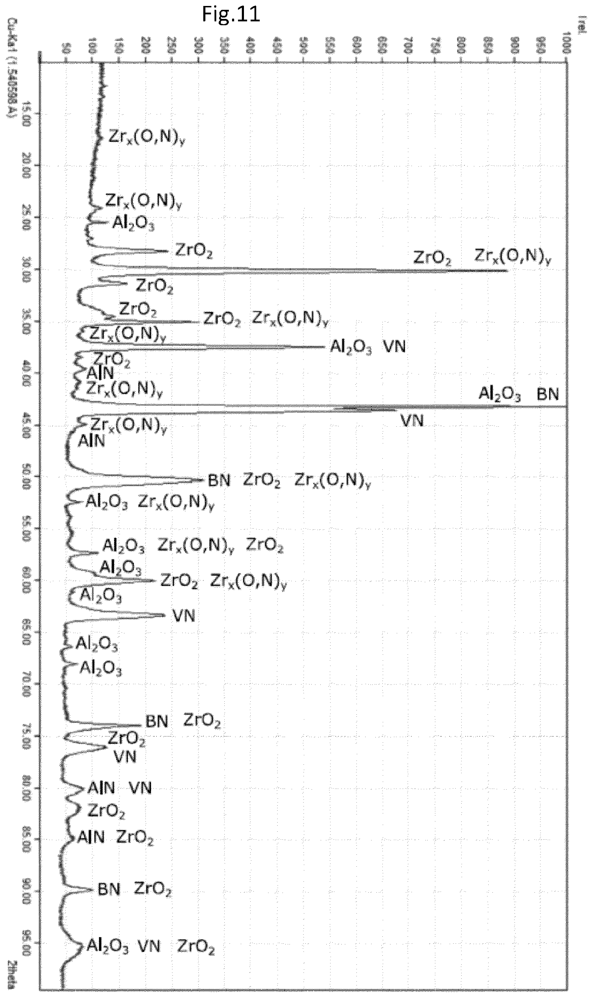

According to an example embodiment the PCBN body 1, 2 was manufactured according to the above method and the PCBN body has about 60 vol% of cBN particles and a binder phase comprising ZrO₂ (both cubic and tetragonal), Al₂O₃, AIN, VN and zirconium oxynitride (Zr(O,N)). Fig. 10 shows XEDS mapping of the different elements in the PCBN body and from the XEDS maps it can be seen how the cBN grains comprising B and N are present in a binder phase comprising O, N, Al, V and Zr. Fig. 11 shows the X-ray diffraction (XRD) intensities of cubic BN, ZrO₂ (both cubic and tetragonal), Al₂O₃, AIN, VN and zirconium oxynitride (Zr(O,N)) in the PCBN body as measured using Cu-Kα radiation and θ-2θ scan. The diffractometer used was STOE STADI MP. For the analysis of the XRD pattern in Fig. 11 the following Crystal Impact Entry (CIE)-cards were used:
Al₂O₃, CIE-card: 96-100-0018
AIN, CIE-card: 96-152-3096
BN, CIE-card: 96-035-1365 (cubic)
VN, CIE-card: 96-035-0768
ZrO₂, CIE-card: 95-050-1089 (tetragonal)
ZrO₂, CIE-card: 96-900-7449 (cubic)
Zrₓ(O,N)_{y}, CIE-card: 96-050-1172

### Example 1

PCBN cutting tools according to an embodiment of the present invention with a composition corresponding to sample 1 in table 1 were produced according to the above alternative example embodiment of the manufacturing method. First comparative PCBN cutting tools with conventional TiC-binder having a composition according to sample 2 in table 1 and second comparative PCBN cutting tools with conventional TiCN-binder having a composition according to sample 3 in table 1, were produced under identical powder preparation and sintering conditions as sample 1.

The cutting tools were manufactured in ISO RNGN090300 insert geometry.

**Table 1**

| Sample | cBN (vol%) | TiC (vol%) | TiCN (vol%) | Al₂O₃ (vol%) | ZrO₂ (vol%) | AlN (vol%) | VN (vol%) | Zr(O,N) (vol%) |
|---|---|---|---|---|---|---|---|---|
| Sample 1 (invention) | 60 | - | - | 6 | 13 | 3 | 15 | 3 |
| Sample 2 (comparative) | 60 | 31 | - | 6 | - | 3 | - | - |
| Sample 3 (comparative) | 60 | - | 31 | 6 | - | 6 | - | - |

Longitudinal turning was performed on Inconel 718 workpiece material supplied in aged condition and having a hardness of HRC 45 with PCBN cutting tools having compositions according to sample 1-3.

The cutting data used were:
1. cutting speed v_{c} = 300 m/min at feed f = 0.10 mm/rev,
2. cutting speed v_{c} = 350 m/min at feed f = 0.10 mm/rev,
while depth of cut was aₚ = 0.3 mm for both cases, corresponding to high-speed finishing conditions. High pressure directed cooling (HPDC) was applied and set for 90 bar coolant pressure at the rake and flank faces of the cutting tool, using 8 % oil-water emulsion as coolant medium.

Flank wear was measured after spiral length of 950 meters which corresponded to the time in cut of 3.2 minutes for cutting speed v_{c} = 300 m/min and 2.7 minutes for cutting speed v_{c} = 350 m/min.

Flank wear was measured using Olympus SZX7 optical microscope.

In table 2 the measured flank wear for cutting speeds of 300 and 350 m/min are shown.

**Table 2.**

| Sample | Flank wear (µm) | Flank wear (µm) |
|---|---|---|
| | v_{c} = 300 m/min; | v_{c} = 350 m/min |
| | f = 0.10 mm/rev | f = 0.10 mm/rev |
| | aₚ = 0.3 mm | aₚ = 0.3 mm |
| Sample 1 (invention) | 198 | 219 |
| Sample 2 (comparative) | 335 | 470 |
| Sample 3 (comparative) | 282 | 328 |

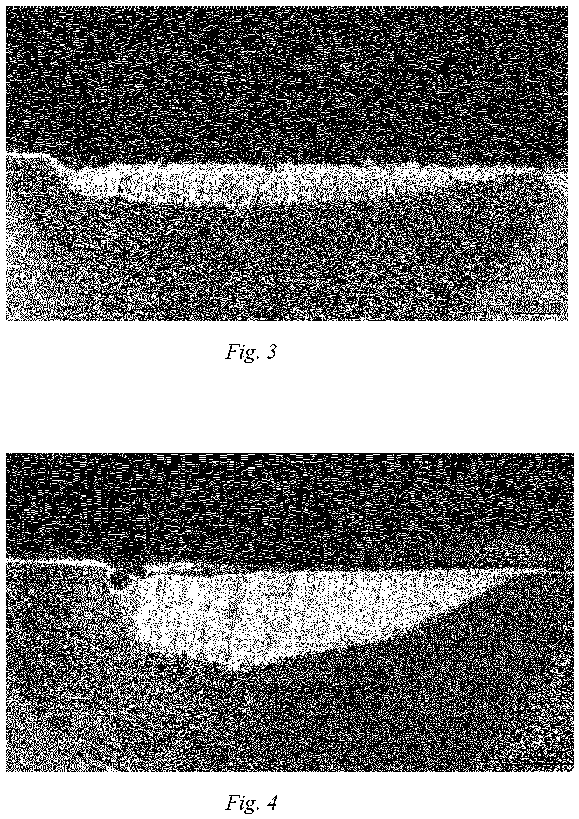

The SEM images in Figures 3, 4 and 5 show the flank wear on Sample 1-3 after 2.7 minutes for cutting speed 350 m/min, feed f = 0.1 mm/rev and depth of cut aₚ = 0.3 mm.

From the experimental results and observations related to the example 1 it was concluded that PCBN cutting tool having a composition according to the present invention demonstrated more than 50 % improvement in performance compared to the conventional TiC-binder and TiCN-binder.

### Example 2

Turning of a curved profile with curvature radius of R38.5 mm was performed on Inconel 718 workpiece material supplied in aged condition and having a hardness of HRC 45. PCBN cutting tools having the same composition as in example 1 were used, i.e. compositions according to sample 1-3 in table 1.

Three different cases of cutting data were used:
1. cutting speed v_{c} = 350 m/min at feed f = 0.10 mm/rev,
2. cutting speed v_{c} = 420 m/min at feed f = 0.08 mm/rev,
3. cutting speed v_{c} = 420 m/min at feed f = 0.10 mm/rev,
while depth of cut in all three cases was ap = 0.3 mm, corresponding to high-speed finishing conditions. High pressure directed cooling (HPDC) was applied and set for 70 bar coolant pressure at the rake and flank faces of the cutting tool, using 8 % oil-water emulsion as coolant medium.

The cutting tools were manufactured in ISO RNGN090300 insert geometry.

Flank and notch wear were measured in time intervals of 0.89 minutes ±0.11 minutes and the performance tests were stopped when either maximum flank wear exceeded the criterion of 250 µm or notch wear exceeded the criterion of 1000 µm.

The PCBN cutting tool with TiC as the main binder phase, i.e. sample 2 has rapidly developed a critical notch wear under cutting conditions of cutting speed v_{c} = 420 m/min at feed f = 0.08 mm/rev and failed by edge fracture and is therefore not included in table 3 showing the tool wear for example 2.

Flank and notch wear was measured using Olympus SZX7 optical microscope.

Table 3 shows the measured flank wear at respective time-in-cut interval when flank or notch wear parameter has reached its limiting criterion for the three different set of cutting data used.

**Table 3.**

| Sample | v_{c} = 350 m/min; | | v_{c} = 420 m/min | | v_{c} = 420 m/min | |
|---|---|---|---|---|---|---|
| | f = 0.10 mm/rev | | f = 0.08 mm/rev | | f = 0.10 mm/rev | |
| | Flank wear (µm) at Time-in-cut (min) | Flank wear rate (µm/min) | Flank wear (µm) at Time-in-cut (min) | Frank wear rate (µm/min) | Flank wear (µm) at Time in cut (min) | Frank wear rate (µm/min) |
| Sample 1 (invention) | 244/7.50 | 32.5 | 211/4.11 | 51.3 | 241/4.91 | 49.1 |
| Sample 2 (comparative) | 223/3.75 | 59.47 | - | - | 343/2.01 | 170.7 |
| Sample 3 (comparative) | 239/5.62 | 42.5 | 231/3.08 | 75.0 | 214/2.89 | 74.1 |

Table 4 shows the measured notch wear for the three different set of cutting data used.

**Table 4.**

| Sample | Notch wear (µm) at Time-in-cut (min) | Notch wear (µm) at Time-in-cut (min) | Notch wear (µm) at Time-in-cut (min) |
|---|---|---|---|
| | v_{c} = 350 m/min; | v_{c} = 420 m/min | v_{c} = 420 m/min |
| | f = 0.10 mm/rev | f = 0.08 mm/rev | f = 0.10 mm/rev |
| Sample 1 (invention) | 907/7.50 | 315/4.11 | 623/4.91 |
| Sample 2 (comparative) | 1239/3.75 | - | 539/2.01 |
| Sample 3 (comparative) | 1479/5.62 | 430/3.08 | 81312.89 |

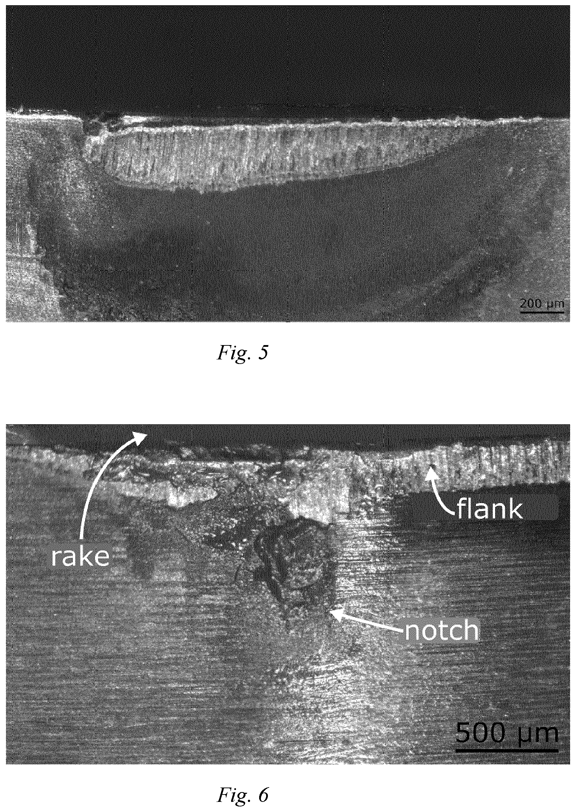

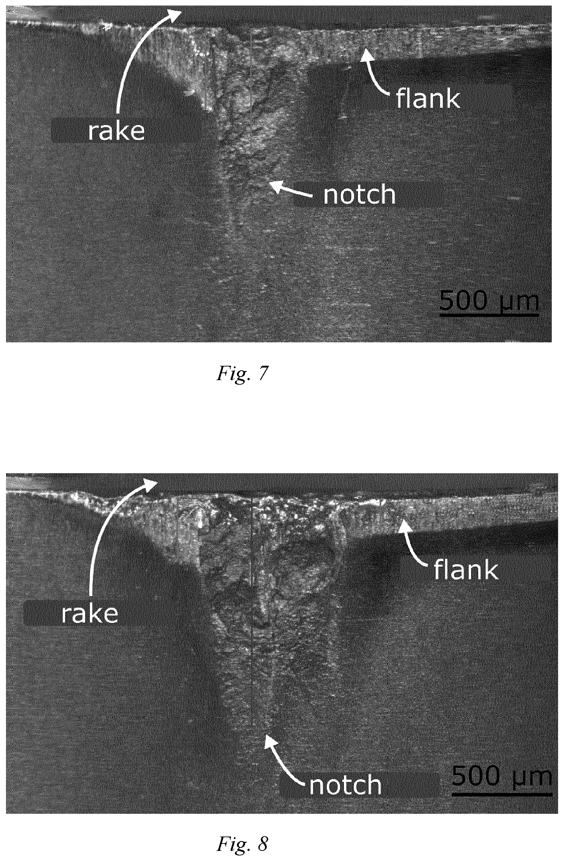

The SEM images in figures 6, 7 and 8 show the notch wear for samples 1, 2 and 3, respectively, for a cutting speed v_{c} = 350 m/min, feed f = 0.1 mm/rev and depth of cut aₚ = 0.3 mm. The result of the notch wear (µm) and time-in-cut (min) for the samples in figures 6, 7 and 8 are also shown in the first column in table 4. As can be seen from table 4, Sample 1 has the longest time-in-cut of 7.50 min, i.e. it cuts two times longer than sample 2 and 33% longer time than sample 3, and at the same time sample 1 still has a lower notch wear than any of samples 2 and 3.

From the experimental results and observations related to the example 2 it was concluded that Sample 1, i.e. the PCBN cutting tool according to present disclosure, demonstrated more than 31 % improvement in performance by flank wear criterion while providing more than 110 % improvement by notch wear criterion compared to the conventional TiC-binder and TiCN-binder.

The present invention is not limited to the embodiments disclosed but may be varied and modified within the scope of the following claims.

## Claims

1. A sintered polycrystalline cubic boron nitride (PCBN) body (1, 2) comprising
between 40 and 85 vol% of cubic boron nitride (cBN) particles and between 15 and 60 vol% of a binder phase, wherein the binder phase comprises at least one metal oxide and at least one metal nitride, **characterized in that**
the at least one metal oxide comprises between 20 and 100 vol% of zirconium oxide (ZrO₂) and up to 80 vol% of alumina (Al₂O₃) counted as a volume percentage of the total metal oxide content of the binder phase, the at least one metal nitride comprises 1 to 10 vol% aluminium nitride (AIN) based on the total binder phase and at least one metal nitride selected from the group consisting of vanadium nitride (VN), niobium nitride (NbN) and hafnium nitride (HfN), wherein the content of said at least one metal nitride selected from the group consisting of vanadium nitride (VN), niobium nitride (NbN) and hafnium nitride (HfN) is at least 10 vol% of the total binder phase, and wherein the content of said at least one metal oxide is at least 10 vol% of the total binder phase.

2. The PCBN body according to claim 1, wherein the binder phase further comprises at least one metal oxynitride being a reaction product of one of the at least one metal oxides and one of the at least one metal nitrides.

3. The PCBN body according to claim 2, wherein the binder phase comprises at least one oxynitride selected from the group consisting of zirconium oxynitride (Zr(O,N)), zirconium vanadium oxynitride ((Zr,V)ON), zirconium niobium oxynitride ((Zr,Nb)ON) and zirconium hafnium oxynitride ((Zr,Hf)ON).

4. The PCBN body according to claim 2 or 3, wherein the binder phase comprises at least one oxynitride selected from the group consisting of aluminium oxynitride (Al(O,N)), aluminium vanadium oxynitride ((Al,V)ON), aluminium niobium oxynitride ((Al,Nb)ON) and aluminium hafnium oxynitride ((Al,Hf)ON).

5. The PCBN body according to claim 1, wherein the binder phase consists of ZrO₂, Al₂O₃, AIN and at least one metal nitride selected from the group consisting of VN, NbN and HfN.

6. The PCBN body according to any one of the preceding claims, wherein the metal nitride selected from the group consisting of VN, NbN and HfN constitutes up to 50 vol% of the total binder phase.

7. The PCBN body according to any one of claims 1 to 4, wherein the binder phase consists of ZrO₂, Al₂O₃, AlN, at least one metal nitride selected from the group consisting of VN, NbN and HfN, and at least one oxynitride from the group consisting of Zr(O,N), (Zr,V)ON, (Zr,Nb)ON, (Zr,Hf)ON, Al(O,N), (Al,V)ON, (Al,Nb)ON and (Al,Hf)ON.

8. The PCBN body according to any one of claims 2 to 5 or according to claim 7, wherein the oxynitride and metal nitride selected from the group consisting of VN, NbN and HfN are between 10 and 50 vol% of the total binder phase of the PCBN body.

9. The PCBN body according to claim 1, wherein the ZrO₂ is between 20 and 90 vol% of the total metal oxide content of the binder phase.

10. The PCBN body according to any one of the preceding claims, wherein the Al₂O₃ is between 5 and 25 vol% of the binder phase.

11. The PCBN body according to any one of the preceding claims, wherein the PCBN body (1, 2) is backed with a backing body (4) of cemented carbide.

12. The PCBN body according to any one of the preceding claims, wherein the PCBN body is coated with a PVD- or CVD coating having a thickness of between 0.8 µm and 15 µm.

13. The PCBN body according to any one of the preceding claims, wherein the PCBN body (1,2) is a cutting tool (3) or is a cutting tip (2) of a cutting tool.

14. A method of manufacturing a PCBN body (1, 2) according to any one of claims 1 to 13, comprising the following steps:
(a) providing a cubic boron nitride (cBN) powder having an average particle size between 0.5 µm and 15 µm,
(b) providing binder constituents comprising ZrO₂, or a mixture of ZrO₂ and Al₂O₃, at least one metal nitride selected from the group consisting of: VN, NbN and HfN constituting at least 10 % by volume of the binder mixture, and metallic aluminium,
(c) admixing the binder constituents with the cBN powder to a powder mixture,
(d) milling the powder mixture,
(e) forming a green body of the powder mixture,
(f) heat treating the green body at a temperature above 600 °C under vacuum to ensure sufficient degassing and removal of absorbed species,
(g) sintering the green body at a temperature of at least 1200 °C and at a pressure of at least 4 GPa to form a solid sintered PCBN compact from which the PCBN body (1, 2) is formed.

15. Use of a PCBN body according to any of claims 1-13 for machining in nickel based and/or cobalt based super alloys.

## Patentansprüche

1. Gesinterter polykristalliner Körper aus kubischem Bornitrid (PCBN) (1, 2) mit zwischen 40 und 85 Vol.-% Partikel aus kubischem Bornitrid (cBN) und zwischen 15 und 60 Vol.-% einer Binderphase, wobei die Binderphase wenigstens ein Metalloxid und wenigstens ein Metallnitrid enthält, **dadurch gekennzeichnet, dass**
das wenigstens eine Metalloxid zwischen 20 und 100 Vol.-% Zirkoniumoxid (ZrO₂) und bis zu 80 Vol.-% Aluminiumoxid (Al₂O₃), gerechnet als Volumenprozent des gesamten Metalloxidgehalts der Binderphase, enthält, das wenigstens eine Metallnitrid 1 bis 10 Vol.-% Aluminiumnitrid (AIN), bezogen auf die gesamte Binderphase, und wenigstens ein Metallnitrid, ausgewählt aus der Gruppe bestehend aus Vanadiumnitrid (VN), Niobnitrid (NbN) und Hafniumnitrid (HfN), enthält, wobei der Gehalt des wenigstens einen Metallnitrids, ausgewählt aus der Gruppe, bestehend aus Vanadiumnitrid (VN), Niobnitrid (NbN) und Hafniumnitrid (HfN), wenigstens 10 Vol.-% der gesamten Binderphase beträgt, und wobei der Gehalt des wenigstens einen Metalloxids wenigstens 10 Vol-% beträgt.

2. PCBN-Körper nach Anspruch 1, wobei die Binderphase ferner wenigstens ein Metalloxynitrid enthält, welches ein Reaktionsprodukt aus einem des wenigstens einen Metalloxids und einem des wenigstens einen Metallnitrids ist.

3. PCBN-Körper nach Anspruch 2, wobei die Binderphase wenigstens ein Oxynitrid enthält, welches aus der Gruppe ausgewählt ist, die aus Zirkoniumoxynitrid (Zr(O,N)), Zirkonium-Vanadium-Oxynitrid ((Zr,V)ON), Zirkonium-Niobium-Oxynitrid ((Zr,Nb)ON) und Zirkonium-Hafnium-Oxynitrid ((Zr, Hf)ON) besteht.

4. PCBN-Körper nach Anspruch 2 oder 3, wobei die Binderphase wenigstens ein Oxynitrid enthält, welches aus der Gruppe ausgewählt ist, die aus Aluminiumoxynitrid (Al(O,N)), Aluminium-Vanadium-Oxynitrid ((Al,V)ON), Aluminium-Niob-Oxynitrid ((Al,Nb)ON) und Aluminium-Hafnium-Oxynitrid ((Al,Hf)ON) besteht.

5. PCBN-Körper nach Anspruch 1, wobei die Binderphase aus ZrO₂, Al₂O₃, AIN und wenigstens einem Metallnitrid, ausgewählt aus der Gruppe bestehend aus VN, NbN und HfN, besteht.

6. PCBN-Körper nach einem der vorhergehenden Ansprüche, wobei das Metallnitrid, ausgewählt aus der Gruppe bestehend aus VN, NbN und HfN, bis zu 50 Vol.-% der gesamten Binderphase ausmacht.

7. PCBN-Körper nach einem der Ansprüche 1 bis 4, wobei die Bindephase aus ZrO₂, Al₂O₃, AIN, wenigstens einem Metallnitrid, ausgewählt aus der Gruppe bestehend aus VN, NbN und HfN, und wenigstens einem Oxynitrid aus der Gruppe bestehend aus (O,N), (Zr,V)ON, (Zr,Nb)ON, (Zr,Hf)ON, Al(O,N), (Al,V)ON, (Al,Nb)ON und (Al,Hf)ON besteht.

8. PCBN-Körper nach einem der Ansprüche 2 bis 5 oder nach Anspruch 7, wobei das Oxynitrid und das Metallnitrid aus der Gruppe ausgewählt sind, bestehend aus VN, NbN und HfN zwischen 10 und 50 Vol.-% der gesamten Binderphase des PCBN-Körpers.

9. PCBN-Körper nach Anspruch 1, wobei das ZrO₂ zwischen 20 und 90 Vol.-% des gesamten Metalloxidgehalts der Binderphase ausmacht.

10. PCBN-Körper nach einem der vorhergehenden Ansprüche, wobei das Al₂O₃ zwischen 5 und 25 Vol.-% der Binderphase ausmacht.

11. PCBN-Körper nach einem der vorhergehenden Ansprüche, wobei der PCBN-Körper (1, 2) mit einem Stützkörper (4) aus Hartmetall hinterlegt ist.

12. PCBN-Körper nach einem der vorhergehenden Ansprüche, wobei der PCBN-Körper mit einer PVD- oder CVD-Beschichtung mit einer Dicke zwischen 0,8 µm und 15 µm beschichtet ist.

13. PCBN-Körper nach einem der vorhergehenden Ansprüche, wobei der PCBN-Körper (1, 2) ein Schneidwerkzeug (3) oder eine Schneidspitze (2) eines Schneidwerkzeugs ist.

14. Verfahren zur Herstellung eines PCBN-Körpers (1, 2) nach einem der Ansprüche 1 bis 13, umfassend die folgenden Schritte:
(a) Bereitstellen eines Pulvers aus kubischem Bornitrid (cBN) mit einer durchschnittlichen Partikelgröße zwischen 0,5 µm und 15 µm,
(b) Bereitstellen von Binderbestandteilen, umfassend ZrO₂ oder eine Mischung aus ZrO₂ und Al₂O₃, wenigstens ein Metallnitrid, ausgewählt aus der Gruppe bestehend aus: VN, NbN und HfN, die wenigstens 10 Vol.-% der Bindermischung ausmachen, und metallisches Aluminium,
(c) Vermischen der Binderbestandteile mit dem cBN-Pulver zu einem Pulvergemisch,
(d) Mahlen der Pulvermischung,
(e) Bilden eines Grünkörpers aus der Pulvermischung,
(f) Wärmebehandlung des Grünkörpers bei einer Temperatur über 600 °C unter Vakuum, um eine ausreichende Entgasung und Entfernung von absorbierten Spezies zu gewährleisten,
(g) Sintern des Grünkörpers bei einer Temperatur von wenigstens 1200 °C und einem Druck von wenigstens 4 GPa, um einen festen gesinterten PCBN-Kompakt zu bilden, aus dem der PCBN-Körper (1, 2) geformt wird.

15. Verwendung eines PCBN-Körpers nach einem der Ansprüche 1-13 zur Bearbeitung von Superlegierungen auf Nickel- und/oder Kobaltbasis.

## Revendications

1. Corps de nitrure de bore cubique polycristallin (PCBN) fritté (1, 2) comprenant entre 40 et 85 % en volume de particules de nitrure de bore cubique (cBN) et entre 15 et 60 % en volume d'une phase de liant, où la phase de liant comprend au moins un oxyde métallique et au moins un nitrure métallique, **caractérisé en ce que**
le au moins un oxyde métallique comprend entre 20 et 100 % en volume d'oxyde de zirconium (ZrO₂) et jusqu' à 80 % en volume d'alumine (Al₂O₃) comptés en pourcentage volumique de la teneur d'oxyde métallique totale de la phase de liant, le au moins un nitrure métallique comprend de 1 à 10 % en volume de nitrure d'aluminium (AIN) sur la base de la phase de liant totale et au moins un nitrure métallique sélectionné parmi le groupe constitué de nitrure de vanadium (VN), de nitrure de niobium (NbN) et de nitrure d'hafnium (HfN), où la teneur dudit au moins un nitrure métallique sélectionné parmi le groupe constitué de nitrure de vanadium (VN), de nitrure de niobium (NbN) et de nitrure d'hafnium (HfN) est d'au moins 10 % en volume de la phase de liant totale, et où la teneur dudit au moins un oxyde métallique est d'au moins 10 % en volume de la phase de liant totale.

2. Corps de PCBN selon la revendication 1, dans lequel la phase de liant comprend en outre au moins un oxynitrure métallique qui est un produit de réaction d'un des au moins un oxydes métalliques et d'un des au moins un nitrures métalliques.

3. Corps de PCBN selon la revendication 2, dans lequel la phase de liant comprend au moins un oxynitrure sélectionné parmi le groupe constitué d'oxynitrure de zirconium (Zr(O,N)), d'oxynitrure de vanadium et de zirconium ((Zr,V)ON), d'oxynitrure de niobium et de zirconium ((Zr,Nb)ON) et d'oxynitrure d'hafnium et de zirconium ((Zr,Hf)ON).

4. Corps de PCBN selon la revendication 2 ou 3, dans lequel la phase de liant comprend au moins un oxynitrure sélectionné parmi le groupe constitué d'oxynitrure d'aluminium (Al(O,N)), d'oxynitrure de vanadium et d'aluminium ((Al,V)ON), d'oxynitrure de niobium et d'aluminium ((Al,Nb)ON) et d'oxynitrure d'hafnium et d'aluminium ((Al,Hf)ON).

5. Corps de PCBN selon la revendication 1, dans lequel la phase de liant se compose de ZrO₂, d'Al₂O₃, d'AlN et d'au moins un nitrure métallique sélectionné parmi le groupe constitué de VN, de NbN et de HfN.

6. Corps de PCBN selon l'une quelconque des revendications précédentes, dans lequel le nitrure métallique sélectionné parmi le groupe constitué de VN, de NbN et de HfN constitue jusqu'à 50 % en volume de la phase de liant totale.

7. Corps de PCBN selon l'une quelconque des revendications 1 à 4, dans lequel la phase de liant se compose de ZrO₂, d'Al₂O₃, d'AlN, d'au moins un nitrure métallique sélectionné parmi le groupe constitué de VN, de NbN et de HfN, et d'au moins un oxynitrure sélectionné parmi le groupe constitué de Zr(O,N), de (Zr,V)ON, de (Zr,Nb)ON, de (Zr,Hf)ON, d'Al(O,N), de (Al,V)ON, de (Al,Nb)ON et de (Al,Hf)ON.

8. Corps de PCBN selon l'une quelconque des revendications 2 à 5 ou selon la revendication 7, dans lequel l'oxynitrure et le nitrure métallique sélectionné parmi le groupe constitué de VN, de NbN et de HfN sont compris entre 10 et 50 % en volume de la phase de liant totale du corps de PCBN.

9. Corps de PCBN selon la revendication 1, dans lequel le ZrO₂ est compris entre 20 et 90 % en volume de la teneur d'oxyde métallique totale de la phase de liant.

10. Corps de PCBN selon l'une quelconque des revendications précédentes, dans lequel l'Al₂O₃ est compris entre 5 et 25 % en volume de la phase de liant.

11. Corps de PCBN selon l'une quelconque des revendications précédentes, où le corps de PCBN (1, 2) est supporté sur un corps de support (4) de carbure cémenté.

12. Corps de PCBN selon l'une quelconque des revendications précédentes, où le corps de PCBN est revêtu d'un revêtement PVD ou CVD présentant une épaisseur comprise entre 0,8 µm et 15 µm.

13. Corps de PCBN selon l'une quelconque des revendications précédentes, où le corps de PCBN (1, 2) est un outil de coupe (3) ou est un embout de coupe (2) d'un outil de coupe.

14. Procédé de fabrication d'un corps de PCBN (1, 2) selon l'une quelconque des revendications 1 à 13, comprenant les étapes suivantes consistant à :
(a) fournir une poudre de nitrure de bore cubique (cBN) présentant une taille de particules moyenne comprise entre 0,5 µm et 15 µm,
(b) fournir des constituants de liant comprenant du ZrO₂, ou un mélange de ZrO₂ et d'Al₂O₃, au moins un nitrure métallique sélectionné parmi le groupe constitué de : VN, NbN et HfN constituant au moins 10 % en volume du mélange de liant, et de l'aluminium métallique,
(c) mélanger les constituants de liant avec la poudre de cBN en un mélange de poudres,
(d) broyer le mélange de poudres,
(e) former un corps cru du mélange de poudres,
(f) traiter thermiquement le corps cru à une température supérieure à 600 °C sous vide pour assurer un dégazage suffisant et une élimination d'espèces absorbées,
(g) fritter le corps cru à une température d'au moins 1200 °C et à une pression d'au moins 4 GPa pour former une pastille de PCBN frittée solide à partir de laquelle le corps de PCBN (1, 2) est formé.

15. Utilisation d'un corps de PCBN selon l'une quelconque des revendications 1 à 13 pour l'usinage dans des superalliages à base de nickel et/ou à base de cobalt.
